Europäisches Patentamt

European Patent Office

Office européen des brevets

(11) Veröffentlichungsnummer: **0 342 584 B1**

(12) **EUROPÄISCHE PATENTSCHRIFT**

(45) Veröffentlichungstag der Patentschrift: **23.12.92**

(21) Anmeldenummer: **89108749.6**

(22) Anmeldetag: **16.05.89**

Die Akte enthält technische Angaben, die nach dem Eingang der Anmeldung eingereicht wurden und die nicht in dieser Patentschrift enthalten sind.

(51) Int. Cl.5: **B01F 11/00**, F16H 21/46

(54) **Vorrichtung zum Bewegen von flüssigen, pastösen und/oder schüttfähigen Medien.**

(30) Priorität: **16.05.88 DE 3816654**

(43) Veröffentlichungstag der Anmeldung:
**23.11.89 Patentblatt 89/47**

(45) Bekanntmachung des Hinweises auf die Patenterteilung:
**23.12.92 Patentblatt 92/52**

(84) Benannte Vertragsstaaten:
**AT BE CH DE ES FR GB IT LI NL SE**

(56) Entgegenhaltungen:
**CH-A- 586 066**
**DE-A- 1 507 896**
**DE-A- 2 941 421**
**DE-C- 589 452**
**US-A- 2 302 804**

(73) Patentinhaber: **Doman, Michael, Dr.**
**Travemünder Allee 63**
**W-2400 Lübeck(DE)**

(72) Erfinder: **Doman, Michael, Dr.**
**Travemünder Allee 63**
**W-2400 Lübeck(DE)**

(74) Vertreter: **Glawe, Delfs, Moll & Partner Patentanwälte**
**Liebherrstrasse 20**
**W-8000 München 26(DE)**

## Beschreibung

Die Erfindung betrifft eine Vorrichtung zum Bewegen von Gegenständen, Gefäßen oder von flüssigen, pastösen und/oder schüttfähigen Medien, die ein Gelenksystem mit mindestens sechs, eine geschlossene Gelenkkette bildenden Gliedern aufweist, von denen jedes jeweils mit zwei benachbarten Gliedern um Gelenkachsen drehbar verbunden ist, wobei mit mindestens einem Glied der Gegenstand, das Gefäß oder eine Einrichtung zum Bewegen der Medien verbunden ist.

Es ist eine Mischvorrichtung mit einem Gelenksystem bekannt (CH-B-216 760), die eine bessere Durchmischung von flüssigen und anderen Medien erlaubt, als dies mit den üblichen Schüttelmischern oder anderen vorbekannten Mischern möglich ist. Das Gefäß mit der darin angeordneten zu mischenden Flüssigkeit führt eine vielfältige und komplizierte Bewegung aus, so daß eine gute Durchmischung erhalten wird. Es besteht aber der Nachteil, daß der Mischbewegung eine kontinuierliche Drehbewegung überlagert ist, daß also das Mischgefäß zwar eine Hin- und Herbewegung durchführt, dabei sich aber insgesamt doch in einer Richtung dreht. Dadurch entsteht der große Nachteil, daß es nicht möglich ist, den Mischbehälter mit Leitungen zu versehen, weil sich diese sonst aufwickeln würden. Außerdem treten Zentrifugalkräfte auf, die die Durchmischung behindern bzw. sogar wieder zu einer Entmischung führen können. Diese Nachteile entstehen aufgrund der gewählten Art des Gelenksystems, das die Kinematik umstülpbarer Gelenksysteme benutzt. Solche Umstülpungssysteme bestehen bekanntlich aus starren Gliedern, die miteinander schwenkbar verbunden sind, wobei die Achsen von je zwei in der Kette sich folgenden Gelenken windschief zueinander stehen, d.h., daß die Achsen bzw. deren Verlängerungen sich nicht schneiden, sondern überall einen großen Abstand voneinander aufweisen.

Der Nachteil, daß sich das Mischgefäß insgesamt in einer Richtung mehr oder weniger kontinuierlich dreht, tritt auch bei anderen Kantengelenksystemen auf (US-A-2 302 804, DE-C-589 452). Bei einer weiteren vorbekannten Maschine zum Mischen (DE-A-1 507 896) kann eine Bewegung überhaupt nur erfolgen, weil die Gelenke keine reinen Drehgelenke sind, sondern Bewegungen in mehreren Freiheitsgraden erlauben, indem sie zum Beispiel gemäß Anspruch 8 als Gummiglieder ausgebildet sind. Diese Maschine hat weiter den Nachteil, daß der bewegte Arbeitstisch nur eine sehr beschränkte Rotations-Hin- und Herbewegung ausführen kann.

Der Nachteil, daß das Mischgefäß eine gerichtete Drehbewegung ausführt, kann zwar vermieden werden, indem das Mischgefäß auf einer durch das Mischgefäß hindurchgeführten Achse drehbar gelagert ist (CH-B-586 066). Dabei tritt dann aber einerseits der Nachteil auf, daß das Mischgefäß auch keine oder nur eine sehr geringe Hin- und Herdrehbewegung ausführen kann, da es entsprechenden Drehbewegungen der Welle 10 nicht folgt, so daß der Mischvorgang weniger effektiv sein wird als bei einem Mischgefäß, das eine solche Hin- und Herdrehbewegung durchführt. Andererseits ist es insbesondere bei Glasgefäßen sehr schwierig, diese auf der Achse zu lagern.

Die Aufgabe der Erfindung besteht darin, eine vielfältig verwendbare Vorrichtung der eingangs genannten Art zu schaffen, mit der die genannten Medien auf vorteilhafte Weise nicht nur ohne Leitungsverbindungen behindernde gerichtete Drehbewegungen besser gemischt, sondern auch in eine gerichtete lineare Bewegung versetzt werden können.

Die erfindungsgemäße Lösung besteht darin, daß sich je zwei benachbarte Drehachsen des Gelenksystems oder deren Verlängerung je in einem Punkt im wesentlichen schneiden und daß die Winkel zwischen benachbarten Drehachsen feste Werte haben.

Es werden also im Gegensatz zur vorbekannten Einrichtung nicht die Kinematik umstülpbarer Gelenksysteme benutzt, die dadurch gekennzeichnet ist, daß ihr eine gleichbleibende Drehrichtung überlagert ist, sondern die Kinematik eines Bewegungssystems, das absichtlich eine überlagerte gleichbleibende Drehbewegung ausschließt. Durch dieses unterschiedliche Gelenksystem wird nun erreicht, daß die Glieder des Gelenksystems sich nicht mehr um ihre eigene Achse mit gleichbleibender Richtung drehen müssen, sondern nur um diese Achse hin- und herschwingen können. Außerdem ist die Art der Verbindung der Glieder und Gelenkelemente unterschiedlich. Durch diese Unterschiede wird nun in erstaunlicher Weise eine deutliche Verbesserung des Mischvorganges erreicht.

Ist eines der Glieder starr mit einem Gefäß verbunden, in dem die Durchmischung erfolgen soll, so führt dieses Gefäß während der vielseitigen Schüttel- und Taumelbewegung keine gerichtete Drehung mehr durch. Es findet vielmehr nur eine starke Hin- und Herdrehung um einen gewissen Maximalwinkel statt. Dadurch ist es z.B. möglich, durch einfache Schläuche laufend Flüssigkeiten oder Zusätze zuzufügen bzw. Flüssigkeiten abzuziehen. Auch elektrische Leitungen können leicht mit dem Gefäß verbunden werden, die zur Heizung und zur Messung oder Steuerung der Vorgänge dienen können. Weder für die Schläuche noch für die Drähte sind komplizierte Verbindungen notwendig, die eine dauernde Drehbewegung aufnehmen können.

Eine besonders vorteilhafte Ausführungsform, die besonders einfach ist, zeichnet sich dadurch aus, daß sich benachbarte Drehachsen bzw. deren Verlängerungen jeweils in einem Punkt schneiden und sie sechs Glieder aufweist, daß von drei Schnittpunkten, zwischen denen jeweils noch ein anderer angeordnet ist, mindestens je einer auf der einen und mindestens je einer auf der anderen Seite einer Ebene liegt, die durch die drei anderen Schnittpunkte aufgespannt wird, und daß jeweils die erste und vierte, zweite und fünfte, dritte und sechste Seite der Gelenkkette gleich lang und jeweils der erste und vierte, zweite und fünfte, dritte und sechste Winkel der Gelenkkette gleich groß sind.

Eine weitere sehr vorteilhafte Ausführungsform zeichnet sich dadurch aus, daß sie sieben Glieder aufweist.

Die Gelenkachsen ermöglichen eine Drehbewegung zwischen benachbarten Gliedern. Bei einer weiteren vorteilhaften Ausführungsform sind dabei die Gelenkachsen Schraubenachsen, so daß sich bei Durchführung einer hin- und hergehenden Drehbewegung die beiden Glieder voneinander entfernen und anschließend wieder aneinander annähern. Hierdurch wird der Mischungseffekt verstärkt.

Einen besonders einfachen Aufbau erhält man, wenn alle Gelenkwinkel gleich groß sind, insbesondere 90° betragen, und alle Gelenkseiten gleich lang sind.

Bei einer alternativen Ausführungsform ist nicht eines der Glieder mit mindestens einem bewegbaren Behälter verbunden. Vielmehr ist die gesamte Vorrichtung in einem Behälter angeordnet, der fest stehen kann. In diesem Fall bewegt sich die Vorrichtung in dem Behälter und durchmischt dabei die Flüssigkeit oder das andere Medium. Zu diesem Zweck ist vorgesehen, daß eines oder mehrere der Glieder mit flächenförmigen oder fahnenförmigen Elementen verbunden sind.

Statt fester flächenförmiger Elemente kann auch vorgesehen sein, daß zwischen den Gliedern eine Membran aufgespannt ist, die bei Bewegung der Glieder eine vielfältige Bewegung durchführt.

Diese Vorrichtungen können wie gesagt zum Durchmischen von Flüssigkeiten und anderen Medien in feststehenden Behältern verwendet werden, wobei nicht ausgeschlossen wird, daß diese Behälter wiederum auch noch eine Bewegung ausführen.

Es kann aber auch die Bewegung der Glieder mit den daran befestigten flächenförmigen Elementen zum Erzeugen einer gerichteten Flüssigkeitsströmung verwendet werden. In diesem Fall ist zweckmäßigerweise vorgesehen, daß die Vorrichtung feststehende Leitflächen für die Medien aufweist. Insbesondere dann, wenn die Vorrichtung in einem rohrförmigen Element angeordnet ist, kann sie als Flüssigkeitspumpe Verwendung finden.

Aber auch als Antrieb ist die Vorrichtung verwendbar, indem das durch das rohrförmige Element strömende und durch die Vorrichtung angetriebene Wasser für Antriebszwecke verwendet wird. Auf ein solches rohrförmiges Element könnte aber auch verzichtet werden.

Wenn man vorsieht, daß zwei Glieder angetrieben sind, so sind die notwendigen Winkelbewegungen des Antriebs auf die Hälfte reduziert.

Die Vorrichtung erlaubt gleichzeitig, verschiedene Mischvorgänge durchzuführen oder mehr Material auf einmal zu mischen, wenn mehr als ein Behälter vorgesehen ist, der durch die Vorrichtung bewegt wird.

Als besonders zweckmäßig hat es sich erwiesen, wenn eine der Achsen den Behälter rollengürtelartig umgreift.

Eine bessere Mischung oder aber eine bessere Bewegung der Medien erhält man, wenn vorgesehen ist, daß die Vorrichtung mehrere Gelenkketten aufweist, wobei von jeder Gelenkkette zwei benachbarte Glieder starr mit zwei benachbarten Gliedern einer anderen Gelenkkette verbunden sind.

Bei einer vorteilhaften Ausführungsform sind entweder die Behälter oder aber die Glieder mit Einrichtungen versehen, um die Bewegung der Medien zu erhöhen. So könnten z.B. in Membranen oder Rührschaufeln Blasenöffnungen oder Strahldüsen vorgesehen sein. An den Wänden des Behälters bzw. der Glieder könnten Propeller vorgesehen sein, die wiederum entweder leer im Medium mitlaufen oder aber angetrieben werden. Der Antrieb wird dadurch besonders einfach, da wie erwähnt die Zuleitungen keine komplizierten Drehverbindungen erfordern.

Es ist nicht unbedingt notwendig, tatsächlich sechs oder sieben Drehgelenke vorzusehen, wie sie bereits oben beschrieben wurden. Es sind vielmehr auch Ausführungsformen die völlig oder im wesentlichen äquivalent sind, möglich. Diese Ausführungsformen sind Gegenstände von Unteransprüchen.

Die Erfindung wird im folgenden anhand von vorteilhaften Ausführungsformen unter Bezugnahme auf die beigefügten Zeichnungen beschrieben. Es zeigen:

Fig. 1    das Schema eines ersten Gelenksystems, das für die Erfindung verwendet werden kann;

Fig. 2    das Schema eines zweiten Gelenksystems, das für die Erfindung verwendet werden kann;

Fig. 3    eine Mischvorrichtung mit einem Behälter unter Verwendung des Gelenksystems der Fig. 1;

Fig. 4    eine andere Mischvorrichtung unter Verwendung des Gelenksystems der Fig 1;

| Fig. 5 | eine Pump- oder Antriebsvorrichtung unter Verwendung des Gelenksystems der Fig. 2; |
| Fig. 6 | sechs Beispiele sechsgliedriger Gelenksysteme, bei denen die flächenförmigen Elemente verschiedene Form haben; |
| Fig. 7 | eine andere Art eines sechsgliedrigen Gelenksystems; |
| Fig. 8 | eine Kombination von zwei miteinander verbundenen sechsgliedrigen Gelenksystemen; |
| Fig. 9 | eine graphische Darstellung zum Vergleich der Wirksamkeit verschiedener Mischvorrichtungen. |

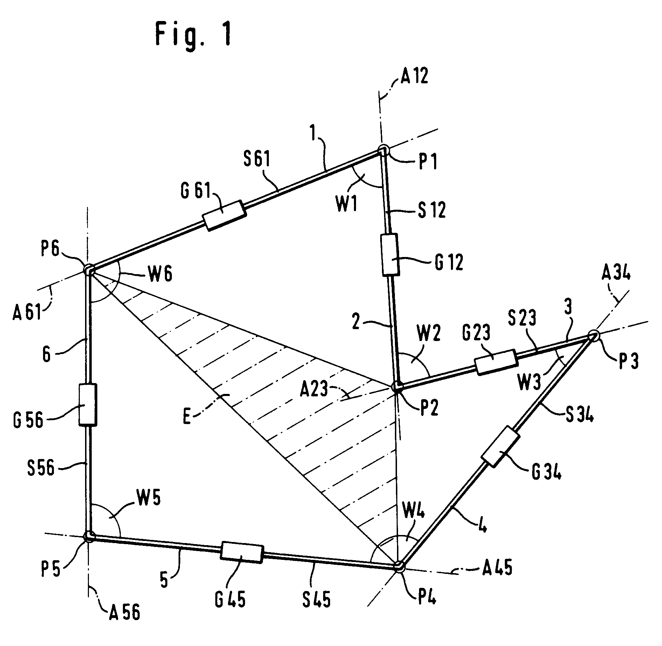

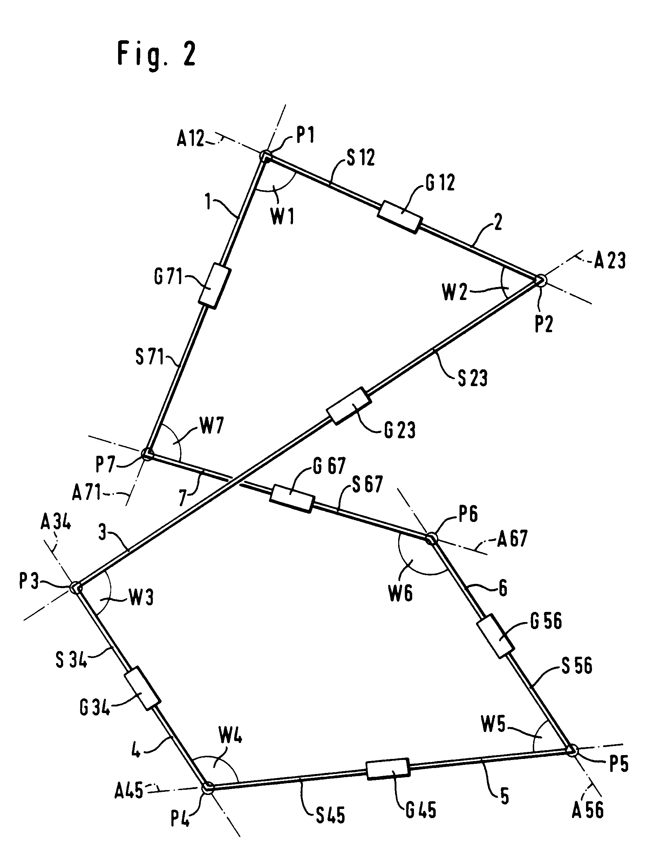

In Fig. 1 und 2 sind die Prinzipien zweier unterschiedlicher Gelenksysteme gezeigt. Die Gelenksysteme bestehen aus Gliedern 1 bis 6 bzw. 1 bis 7, die zwei Drehachsen A12, A23, A34,... aufweisen, deren Verlängerungen sich in Punkten P1, P2, P3, P4,... in einem festen Winkel W1, W2, W3, W4,... schneiden oder in einem geringen Abstand aneinander vorbeigehen. Auf den Drehachsen sind die Drehgelenke G12, G23, G32.. bis G71 angeordnet. Gehen die Drehachsen aneinander vorbei, so entsteht ein Versatzstück V, das als gerade Strecke gedacht werden kann, die auf den beiden aneinander vorbeigehenden Drehachsen senkrecht steht.

Damit die Drehbarkeit des Gelenksystems gewährleistet ist, darf V einen gewissen Maximalwert Vmax nicht überschreiten. Die Glieder 1 bis 6 bzw. 1 bis 7 können dabei im wesentlichen als Streben ausgebildet sein, aber auch z.B. flächenförmige Elemente sein. An den Drehgelenken G12, G23, G34 usw. sind die Glieder 1, 2, 3,... mit benachbarten Gliedern 2, 3, 4 usw. so miteinander verbunden, daß eine Relativdrehung benachbarter Glieder um die Achsen stattfinden kann. Die Achsen können dabei auch als Schraubenachsen ausgebildet sein, so daß bei Drehung sich gleichzeitig die benachbarten Glieder aneinander annähern oder voneinander entfernen.

Wird die so gebildete Gelenkkette an einem der Glieder festgehalten und wird ein anderes Glied angetrieben, so führt die gesamte Gelenkkette (bis auf das festgehaltene Element) eine vielfältige taumelnde oder oszillierende Schwingbewegung bzw. reversierende Dreh-Kippbewegung durch.

Die Winkel W1, W2, ... und die Seiten S12, S23,... (d.h. die Strecken zwischen benachbarten Punkten P1 und P2, P2 und P3,...) können beliebige Werte haben, wobei vorzugsweise die Winkel im Bereich von 60-120° liegen. Bei der sechsgliedrigen Gelenkkette sind jeweils die Seiten S12 und S45, S23 und S56, S34 und S61 gleich lang und jeweils die Winkel W1 und W4, W2 und W5, W3 und W6 gleich groß. Es können aber auch alle Seiten, zum Beispiel bei der siebengliedrigen Gelenkkette, gleich lang sein und alle Winkel gleich groß sein.

Durch geeignete Wahl der Parameter, wie sie insbesondere in den Ansprüchen beschrieben ist, kann erreicht werden, daß die Gelenkkette genau einen Freiheitsgrad hat, also eine zwangsweise geführte Bewegung durchführt, die für die zu erreichenden Zwecke wesentlich ist. Bei einer sechsgliedrigen Gelenkkette ist es dazu insbesondere erforderlich, daß von den drei Schnittpunkten P1, P3 und P5 mindestens je einer auf der einen und mindestens je einer auf der anderen Seite einer Ebene E liegt, die durch die drei anderen Schnittpunkte P2, P4 und P6 aufgespannt wird.

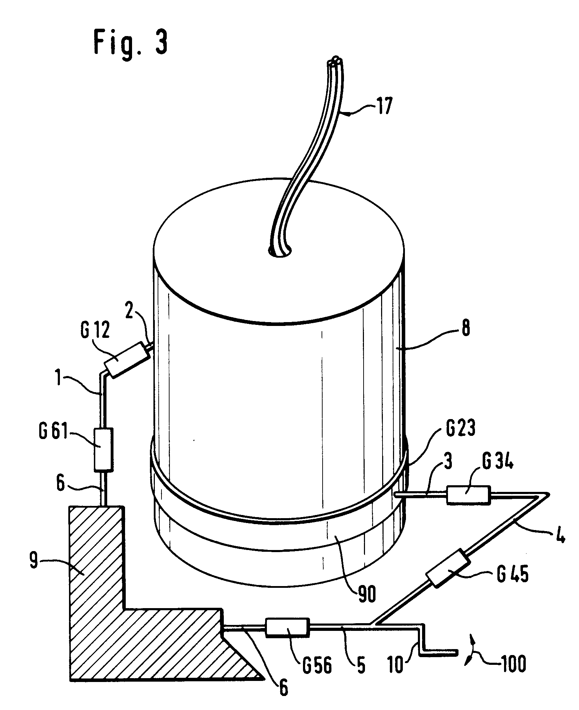

Bei der Ausführungsform der Fig. 3 ist das Glied 2 als Behälter 8 ausgebildet bzw. mit einem Behälter 8 verbunden, während das Glied 6 an einem Gestell 9 starr befestigt ist. Am Glied 5 greift ein Antrieb 10 an, durch den die Gelenkkette und damit der Behälter 8 in die reversierende Dreh-Kippbewegung versetzt wird, so daß das im Behälter 8 befindliche Medium auf sehr wirkungsvolle Weise durchmischt wird. Der Antrieb 10 muß dabei eine Hin- und Herbewegung ausführen, die durch den Doppelpfeil 100 angedeutet ist. Solche Antriebe sind an sich bekannt, so daß auf eine nähere Beschreibung verzichtet wird. Der Behälter 8 ist in einem Rollengürtel 90 drehbar gelagert, der das Gelenk G23 bildet.

In Fig. 3 sind flexible schlauch- oder drahtförmige Elemente 17 angedeutet, durch die Flüssigkeiten zu- oder abgeführt werden können, durch die Messungen vorgenommen werden können, durch die Energie z.B. zum Erwärmen oder zum Betreiben von Geräten zugeführt werden kann, die im Behälter 8 angeordnet sind. Auch andere Anwendungen sind möglich. Da der Behälter 8 keine gerichtete Drehung durchführt, sind komplizierte Drehgelenk- oder Drehkontaktverbindungen nicht erforderlich, solange die Elemente 17 genügend flexibel sind.

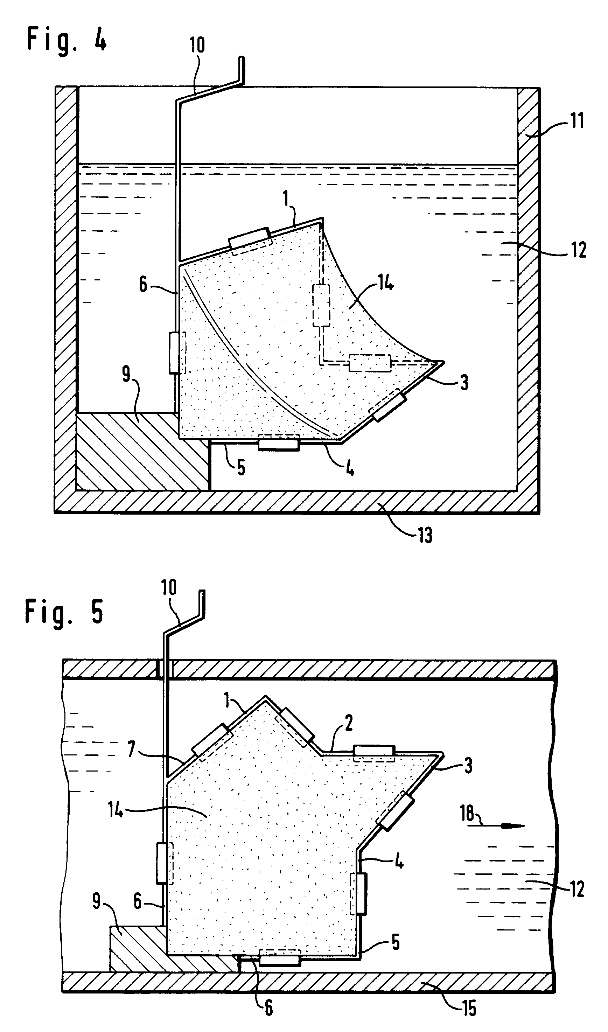

Bei der Ausführungsform der Fig. 4 ist die in diesem Fall sechsgliedrige Gelenkkette in einem Behälter 11 angeordnet, der mit der zu mischenden Flüssigkeit 12 gefüllt ist. Das Glied 5 ist bei 9 starr am Behälterboden 13 befestigt, während das Glied 6 mit einem Antrieb 10 versehen ist, so daß es in Bewegung versetzt werden kann. Zwischen den in diesem Fall strebenförmig ausgebildeten Gliedern ist eine Membran 14 aufgespannt, die in eine Bewegung versetzt wird, durch die die Flüssigkeit 12 durchmischt wird. Die Membran kann auch doppelwandig und perforiert sein, sodaß durch die Löcher ein Gas austreten kann, das in die Flüssigkeit gepumpt wird.

In der Ausführungsform der Fig. 5 ist eine siebengliedrige Gelenkkette bei 9 befestigt, und zwar im Inneren eines Rohres 15. Die Gelenkkette wird durch einen Antrieb 10 angetrieben. Die Glieder sind durch eine Membran 14 überspannt so daß sie bei Bewegung entsprechende Kräfte auf die Flüssigkeit ausüben, wobei in diesem Fall 12 ein Antrieb der Flüssigkeit in Richtung des Pfeiles 18 bewirkt wird. Dadurch kann eine Pumpbewegung auf die Flüssigkeit ausgeübt werden oder aber eine Antriebsbewegung z.B. für ein Wasserfahrzeug geschaffen werden, die sehr wirksam ist.

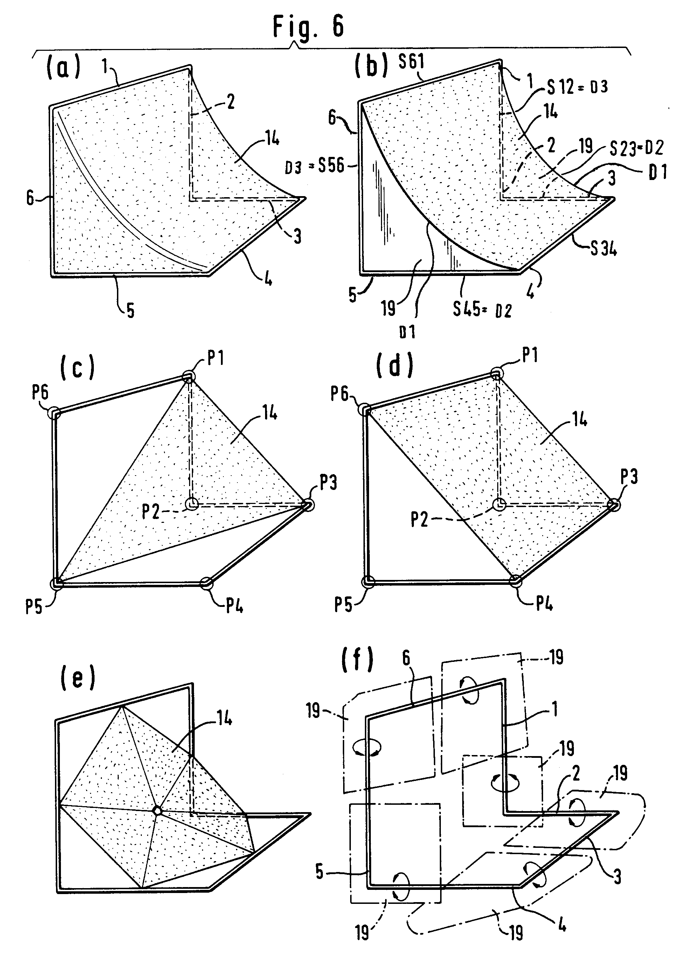

In den Ausführungsformen der Fig. 6 sind sechsgliedrige Gelenksysteme gezeigt, die mit flächenförmigen Elementen versehen sind. Bei der Ausführungsform (a) ist eine Membran 14 direkt mit den Gliedern 1 bis 6 verbunden bzw. zwischen diesen Gliedern 1 bis 6 aufgespannt. Die Membran kann dabei starr an den Gliedern befestigt sein oder drehbar auf dieselben aufgeschoben sein (z.B. mit Hilfe eines schlauchförmigen Randes). Die Gelenke zwischen den Gliedern sind in der Fig. nicht dargestellt. Sie können ungefähr in der Mitte der geraden Abschnitte, aber auch in der Nähe einer Ecke der Gelenkkette angeordnet sein.

Bei der Ausführungsform (b) in Fig. 6 sind zwei starre, im wesentlichen dreieckförmige Flächen 19 vorgesehen, wobei dann die Membran 14 mit zwei Seiten S34 und S61 des Gelenksystems und je einer Seite D1 der beiden dreiecksförmigen starren Flächen 19 verbunden ist. Die Gelenke zwischen den Gliedern 1, 2, ... sind auf geeignete Weise vorgesehen, z.B. durch rohrförmige Lager an den beiden Seiten D2, D3 der Dreiecksfläche 19, die nicht mit der Membran 14 verbunden sind. Jede Fläche 19 wäre dann starr mit einem Glied 2, 5 und mit je einer Drehverbindung mit zwei weiteren Gliedern 4 und 6 bzw 1 und 3 verbunden.

Bei der Ausführungsform (c) ist die Membran 14 an drei Eckpunkten befestigt, nämlich den Eckpunkten P1, P3 und P5, also mit jedem zweiten Eckpunkt verbunden. Es ist auch möglich, die Membran 14 durch eine starre Fläche zu ersetzen, da das aus den Eckpunkten P1, P3 und P5 gebildete Dreieck seine Form nicht ändert. Zwischen den Rändern der Membran 14 oder der entsprechenden starren Fläche 19 (Fig. 6(b)) und den nächstliegenden Gelenkseiten können wieder Membranen aufgespannt werden.

Bei der Ausführungsform (d) ist eine flexible Membran 14 an vier Eckpunkten, P1, P3, P4 und P6 befestigt. Die Membran 14 hat dabei im wesentlichen rechteckige Gestalt. Selbstverständlich wird bei Bewegung des Gelenksystems die Membran verformt, insbesondere sattelförmig verformt.

Bei der Ausführungsform (e) ist die Membran 14 an sechs Punkten jeweils mit ungefähr in der Mitte der Gelenkseiten liegenden Punkten verbunden.

Bei der Ausführungsform (f) ist jedes der Glieder 1 bis 6 mit einer starren Fläche 19 verbunden bzw. besteht im wesentlichen aus einer solchen starren Fläche 19.

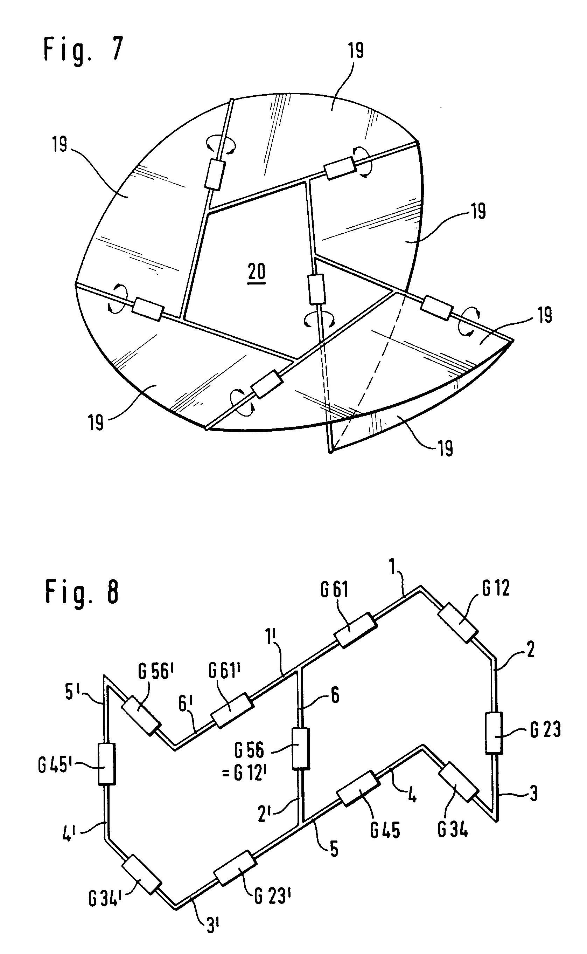

Bei der Ausführungsform der Fig. 7 sind die flächenförmigen Elemente 19 der Glieder 1 bis 6 scharnierartig miteinander verbunden. In der Mitte ist jeweils eine Öffnung 20 frei, die wiederum mit einer Membran bespannt werden kann.

In Fig. 8 sind zwei Gelenksysteme gezeigt, nämlich das rechts gezeigte Gelenksystem mit den Gliedern 1 bis 6 und das links gezeigte, genau identisch aufgebaute Gelenksystem mit den Gliedern 1' bis 6'. Die beiden Gelenksysteme haben zwei Glieder und ein Gelenk gemeinsam. So ist das Glied 6 des rechten Gelenksystems starr mit dem Glied 1' des linken Gelenksystems verbunden. Das Glied 5 des rechten Gelenksystems ist mit dem Glied 2' des linken Systems starr verbunden. Die Gelenke G56 des rechten Gelenksystems und G12' des linken Gelenksystems sind ein gemeinsames Gelenk. Durch die gemeinsamen Elemente wird die Bewegung des einen Gelenksystems auf das andere übertragen. Auf ähnliche Weise können auch mehr als zwei Gelenksysteme miteinander verbunden sein.

Es wurden folgende Vergleichsversuche mit vergleichbaren Mischern durchgeführt, die ebenfalls keine gerichtete Drehbewegung durchführen und deshalb mit flexiblen Zuleitungen auf einfache Weise verbunden werden konnten.

In einem bekannten Horizontalmischer erfolgt die Hin- und Herbewegung in einer Richtung, und zwar annähernd in der Horizontalen, wobei die Amplitude 48 mm betrug und die Schüttelfrequenz stufenlos von 0 bis 4 Hz regelbar war.

Im Vertikalmischer wurde durch Drehen des Horizontalmischers um 90° gewonnen, so daß die Bewegung in der Vertikalen erfolgt. Frequenz und Amplitude waren die gleichen wie beim Horizontalmischer.

Beim Taumelmischer findet eine gleichzeitige Bewegung in drei zueinander senkrechten Richtungen statt, was zu einer taumelnden, sehr ungleichmäßigen Bewegung führt.

Beim Torsionsmischer erfolgt die Bewegung durch Hin- und Herdrehen um eine waagerechte Achse, wobei der Torsionswinkel 58° betrug und die Schüttelfrequenz stufenlos von 0 bis 5 Hz einregelbar war.

Zum Vergleich wurde der erfindungsgemäße Mischer herangezogen.

Zur Charakterisierung der einzelnen Mischer wurden zwei unabhängige physikalische Eigenschaften untersucht: der Pralldruck und die Dispergierfähigkeit.

Pralldruck. Beim Schütteln einer Flüssigkeit in einem geschlossenen Behälter wird diese gegen die Behälterwände geschleudert. Durch das Aufprallen der Flüssigkeit entsteht kurzzeitig eine Druckerhöhung, der sogenannte Pralldruck. Wegen der Inkompressibilität von Flüssigkeiten überträgt sich der Pralldruck auf den gesamten Flüssigkeitskörper. Der Pralldruck wird mit einer Drucksonde, die sich im Innern der Flüssigkeit befindet, gemessen. Der Pralldruck ist eine Oberflächenkraft. Er beschreibt, mit welcher Kraft auf die Fläche von Teilchen eingewirkt wird, die sich in der Flüssigkeit befinden. (Druck = Kraft pro Fläche).

Dispergierfähigkeit. Hiermit wird im folgenden die Eigenschaft des Schüttlers bezeichnet, im Laufe der Schüttelbewegung mittelgroße, in der Lösung befindliche Festkörper, die schwerer als Wasser sind, vom Boden zu erheben und möglichst weit im Wasserkörper zu verteilen. Dies ist eine bedeutende Mischereigenschaft. Verwendet wurden Keramikringchen (Höhe und Durchmesser = 8 mm).

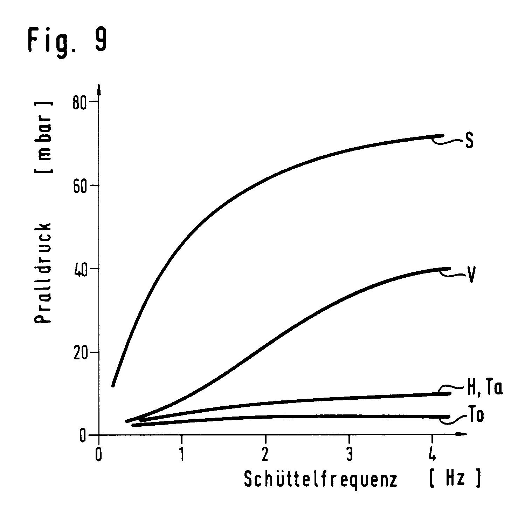

Die Ergebnisse sind in Abhängigkeit von der Schüttelfrequenz in Fig. 9 dargestellt.

Dort bezeichnet H die Kurve für den Horizontalmischer, V diejenige für den Vertikalmischer, Ta die für den Taumelmischer, To die für den Torsionsmischer und S diejenige für den Mischer der Erfindung. Der Pralldruck wurde mit einer Drucksonde in der Flüssigkeit gemessen. Für alle Mischer wurde derselbe zylindrische Behälter verwendet, der einen Innenradius von 5 cm und eine Innenhöhe von 18 cm sowie ein Volumen von 1.413 ml aufwies und mit 850 ml Leitungswasser gefüllt war.

Fig. 9 zeigt deutlich, daß der erfindungsgemäße Mischer die höchsten Werte liefert. Während der Torsionsmischer aufgrund seiner ausgewogenen Drehbewegung nur geringe Druckerhöhungen gibt, die nicht über 5 Millibar (mb) hinauskommen, nimmt beim Horizontalmischer und Taumelmischer der Pralldruck mit ansteigender Schüttelfrequenz bis ca. maximal 10 mb bei 4 Hz zu. Beim Vertikalschüttler zeigt sich bei 4 Hz der 4-fache Wert, beim Mischer der Erfindung der 7-fache Wert des Horizontalmischers. Die besondere Stärke des erfindungsgemäßen Mischers liegt im niederen Frequenzbereich von ca. 1 Hz, wo er den Vertikalmischer noch um das 10-fache übertrifft.

Die Dispergierfähigkeit wurde in Abhängigkeit von der Schüttelfrequenz gemessen, die in Zyklen pro Sekunde oder Hz angegeben wird.

Für alle 5 Mischertypen wurde derselbe zylindrische Behälter verwendet (Innenmaße: r = 5 cm, h = 18 cm, Volumen = 1413 ml). In den mit 800 ml Leitungswasser gefüllten Behälter wurden zusätzlich 200 kleine Keramikringe gefüllt, die ein Gesamtvolumen von 30 ml und ein Gesamtgewicht von 83 g hatten; Maße der Ringe: 8 mm Außendurchmesser, 8 mm Höhe. Jeder Ring wog 0,415 g, das spezifische Gewicht des Keramikmaterials betrug 2,8 g/cm$^3$.

Horizontalmischer:

Bis 1,5 Hz blieben die Ringe am Boden des Behälters liegen. Ab 1,6 Hz wurden 3-5 Ringe ca. 1 cm in die Flüssigkeit gehoben. Bei 4 Hz waren es kaum 10 Ringe, die etwa 2 cm über den restlichen 190 Ringen schwebten, welche am Boden hinund hergerüttelt wurden.

Vertikalmischer:

Bis ca. 3 Hz blieben die Ringe am Boden liegen. Bei 4 Hz war etwa die Hälfte der Ringe maximal 3 cm hoch im Wasser und führte eine hüpfende Bewegung aus. Bis ca. 25% des Wasserkörpers wurde dann von dispergierten Ringen erfüllt. Die andere Hälfte der Ringe wurde am Boden hin- und hergerüttelt.

Taumelmischer:

Wie beim Horizontalmischer.

Torsionsmischer:

Bei 1 Hz wurden vereinzelte Ringe an den Enden des Behälters 1-2 cm in die Flüssigkeit geworfen; bei 2 Hz waren es ca. 20% der Ringe; bei 4 Hz wurden ca. 60% der Ringe erfaßt und in der unteren Hälfte der Flüssigkeit dispergiert. Die Konzentration der Ringe war am größten am rechten und linken Ende des Behälters.

Mischer der Erfindung:

Bereits bei 1 Hz wurden nahezu alle Ringe erfaßt und durch das gesamte Flüssigkeitsvolumen transportiert. Mit zunehmender Schüttelfrequenz trat eine vehemente Steigerung des Dispergiervorganges ein.

Diese Ergebnisse der Dispergierfähigkeit von mittelgroßen Festkörpern zeigen, daß der erfindungsgemäße Mischer auch hier am besten geeignet ist. Während Horizontalmischer und Taumelmischer bei den untersuchten Frequenzen die Festkörper nur geringfügig vom Boden nach oben bewegen können, gelingt es im Vertikalmischer bei 4 Hz das Schüttgut insgesamt schon etwas vom Boden abzuheben. Das beste Ergebnis nach dem erfindungsgemäßen Mischer zeigt jedoch der Torsionsmischer, obwohl er bei den Pralldruckmessungen die niedrigsten Werte aufwies. Dies dokumentiert sehr deutlich, daß Pralldruck und Dispergierfähigkeit, in denen der erfindungsgemäße Mischer die besten Werte lieferte, zwei voneinander unabhängige Parameter sind.

Die besseren Mischeigenschaften können für vielfältige Zwecke verwendet werden, z.B. auch für biochemische Prozesse, bei denen eine Vielzahl von Parametern, oft auf sehr komplexe Weise optimiert werden müssen. So ist z.B. die richtige Verteilung der Reaktionspartner und Reaktionsprodukte in der Reaktionslösung dann besonders kritisch, wenn es sich um ein sogenanntes Drei-Phasen-Gemisch handelt, in dem die Reaktionspartner in der festen, flüssigen und gasförmigen Phase gleichzeitig anwesend sind und die Reaktionsabläufe sich in Grenzflächen vollziehen, die in genügend hoher Zahl an Qualität vorhanden sein müssen. Die Mischung kann dabei mit dem erfindungsgemäßen System sowohl in bewegten Behältern erfolgen, als auch in ruhenden Behältern, in denen das Gemisch von einer sattelförmig zwischen den Gliedern aufgespannten Membran in Bewegung gesetzt wird, die ebenfalls keine Drehkomponente der Bewegung bewirkt, sondern die Flüssigkeit ähnlich Delphinflossen in rhythmische Schwingungen versetzt.

**Patentansprüche**

1. Vorrichtung zum Bewegen von Gegenständen, Gefäßen oder von flüssigen, pastösen und/oder schüttfähigen Medien, die ein Gelenksystem mit mindestens sechs, eine geschlossene Gelenkkette bildenden Gliedern (1 bis 6; 1 bis 7) aufweist, von denen jedes (1 bis 6; 1 bis 7) jeweils mit zwei benachbarten Gliedern um Gelenkachsen (A12, A23, A34,...) drehbar verbunden ist, wobei mit mindestens einem Glied (1 bis 6; 1 bis 7) der Gegenstand, das Gefäß (8) oder eine Einrichtung (14, 19) zum Bewegen der Medien verbunden ist, dadurch gekennzeichnet, daß sich je zwei benachbarte Drehachsen (A61 und A12, A12 und A23, ...bis A56 und A61; A71 und A12, A12 und A23... bis A67 und A71) oder deren Verlängerung je in einem Punkt (P1, P2, P3,...) im wesentlichen schneiden und daß die Winkel zwischen benachbarten Drehachsen feste Werte haben.

2. Vorrichtung nach Anspruch 1, dadurch gekennzeichnet, daß sich benachbarte Drehachsen bzw. deren Verlängerungen jeweils in einem Punkt schneiden und sie sechs Glieder (1 bis 6) aufweist, daß von drei Schnittpunkten (P1, P3, P5), zwischen denen jeweils noch ein anderer (P2, P4, P6) angeordnet ist, mindestens je einer auf der einen und mindestens je einer auf der anderen Seite einer Ebene liegt, die durch die drei anderen Schnittpunkte (P2, P4, P6) aufgespannt wird, und daß jeweils die erste und vierte, die zweite und fünfte sowie die dritte und sechste Seite der Gelenkkette (S12 und S45, S23 und S56, S34 und S61) gleich lang und jeweils der erste und vierte, der zweite und fünfte sowie der dritte und sechste Winkel der Gelenkkette (W1 und W4, W2 und W5, W3 und W6) gleich groß sind.

3. Vorrichtung nach Anspruch 1, dadurch gekennzeichnet, daß sie sieben Glieder (1 bis 7) aufweist.

4. Vorrichtung nach einem oder mehreren der Ansprüche 1 oder 2, dadurch gekennzeichnet, daß die Gelenkachsen (A12 bis A71) Schraubenachsen sind.

5. Vorrichtung nach einem oder mehreren der Ansprüche 1 bis 4, dadurch gekennzeichnet, daß alle Winkel (W1, W2, W3...) gleich groß sind, insbesondere 90° betragen, und alle Seiten (S12 bis S71) gleich lang sind.

6. Vorrichtung nach einem oder mehreren der Ansprüche 1 bis 5, dadurch gekennzeichnet, daß mit mindestens einem der Glieder (1 bis 7) ein bewegbarer Behälter (8) verbunden ist.

7. Vorrichtung nach einem oder mehreren der Ansprüche 1 bis 5, dadurch gekennzeichnet, daß eines oder mehrere der Glieder mit flächenförmigen Elementen (19) verbunden sind.

8. Vorrichtung nach Anspruch 7, dadurch gekennzeichnet, daß zwischen den Gliedern (1 bis 7) eine Membran (14) oder Flächenelemente (14, 19) angebracht sind.

9. Vorrichtung nach Anspruch 7 oder 8, dadurch gekennzeichnet, daß die Vorrichtung feststehende Leitflächen für die Medien aufweist.

10. Vorrichtung nach einem oder mehreren der Ansprüche 7 bis 9, dadurch gekennzeichnet, daß sie in einem rohrförmigen Element (15) angeordnet ist.

11. Vorrichtung nach Anspruch 6, dadurch gekennzeichnet, daß eine der Achsen (A12 bis A71) den Behälter (8) rollengürtelartig umgreift.

12. Vorrichtung nach einem der Ansprüche 1 bis 11, dadurch gekennzeichnet, daß sie mehrere Gelenkketten aufweist, wobei von jeder Gelenkkette zwei benachbarte Glieder (1 bis 7) starr mit zwei benachbarten Gliedern (1 bis 7) einer anderen Gelenkkette verbunden sind.

13. Vorrichtung nach einem der Ansprüche 1 bis 12, dadurch gekennzeichnet, daß Teile der Vorrichtung mit die Bewegung der Medien fördernden Einrichtungen versehen sind.

14. Vorrichtung nach Anspruch 7 oder 8, dadurch gekennzeichnet, daß durch Öffnungen in den Flächen Flüssigkeiten oder Gase strömen, die dem Medium zugefügt und mit ihm vermischt werden.

15. Vorrichtung nach einem der Ansprüche 1 bis 14, dadurch gekennzeichnet, daß zumindest in einem Eckpunkt ein Drehgelenk vorgesehen ist, dessen Achse senkrecht zu den Drehachsen der beiden benachbartern Drehgelenke steht.

**Claims**

1. An apparatus for moving articles, vessels or liquid, pasty and/or pourable media, which has an articulation system with at least six members (1 to 6; 1 to 7) forming a closed articulation chain, each of which members (1 to 6; 1 to 7) is respectively connected with two adjacent members so as to be able to rotate about articulation axes (A12, A23, A34,...), the article, the vessel (8) or a device (14, 19) for moving the media being connected with at least one member (1 to 6; 1 to 7), characterised in that each two adjacent axes of rotation (A61 and A12, A12 and A23,... to A56 and A61; A71 and A12, A12 and A23... to A67 and A71) or their extension substantially intersect respectively at one point (P1, P2, P3,...), and that between adjacent axes of rotation the angles have fixed values.

2. An apparatus according to Claim 1, characterised in that adjacent axes of rotation or their extensions each intersect at a point and there are six members (1 to 6), in that between each of three intersection points (P1, P3, P5) another one (P2, P4, P6) is disposed, in each case at least one being situated on one side of a plane and at least one being situated on the other side thereof, which plane is bounded by three other intersection points (P2, P4, P6), and in that respectively the first and fourth, the second and fifth, and the third and sixth sides of the articulation chain (S12 and S 45, S 23 and S 56, S34 and S61) are of equal length and respectively the first and fourth, the second and fifth, and the third and sixth angles of the articulation chain (W1 and W4, W2 and W5, W3 and W6) are of equal size.

3. An apparatus according to Claim 1, characterised in that there are seven members (1 to 7).

4. An apparatus according to Claim 1 and/or Claim 2, characterised in that the articulation axes (A12 to A71) are helical axes.

5. An apparatus according to one or more of Claims 1 to 4, characterised in that all the angles (W1, W2, W3...) are equal, in particular are 90°, and all the sides (S12 to S71) are of equal length.

6. An apparatus according to one or more of Claims 1 to 5, characterised in that a movable container (8) is connected to at least one of the members (1 to 7).

7. An apparatus according to one or more of Claims 1 to 5, characterised in that one more of the members are connected to surface-like elements (19).

8. An apparatus according to Claim 7, characterised in that a membrane (14) or surface elements (14, 19) are mounted between the members (1 to 7).

9. An apparatus according to Claim 7 or 8, characterised in that the apparatus has fixed deflectors for the media.

10. An apparatus according to one or more of Claims 7 to 9, characterised in that it is disposed in a tubular element (15).

11. An apparatus according to Claim 6, characterised in that one of the axes (A12 to A71) embraces the container (8) in the manner of a roller belt.

12. An apparatus according to any one of Claims 1 to 11, characterised in that it has a plurality of articulation chains, wherein in each articulation chain two adjacent members (1 to 7) are rigidly connected with two adjacent members (1 to 7) of another articulation chain.

13. An apparatus according to any one of Claims 1 to 12, characterised in that parts of the apparatus are provided with means for conveying movement to the media.

14. An apparatus according to Claim 7 or 8, characterised in that liquids or gases, which are added to or mixed with the medium, flow through openings in the surfaces.

15. An apparatus according to any one of Claims 1 to 14, characterised in that at least in one corner point a hinge joint is provided, the axis of which is perpendicular to the axes of rotation of the two adjacent hinge joints.

## Revendications

**1.** Dispositif pour agiter des objets, des récipients ou des milieux de type liquide, pâteux et/ou granuleux, qui comporte un système articulé ayant au moins six éléments (1 à 6; 1 à 7) formant une chaîne fermée à articulations, chaque élément (1 à 6; 1 à 7) étant relié respectivement aux deux éléments voisins de façon à pouvoir pivoter autour d'axes d'articulation (A12, A23, A34, ...), l'objet, le récipient (8) ou un dispositif (14,19) étant relié à au moins un élément (1 à 6; 1 à 7) pour agiter les milieux, caractérisé en ce que deux axes d'articulation voisins (A61 et A12, A12 et A23,... à A56 et A61; A71 et A12, A12 et A23, ... à A67 et A71) ou leurs prolongements se coupent sensiblement en un point respectivement (P1, P2, P3,...) et en ce que les angles entre deux axes voisins ont des valeurs fixes.

**2.** Dispositif selon la revendication 1, caractérisé en ce que deux axes d'articulation voisins ou leurs prolongements se coupent respectivement en un point et en ce qu'il comporte six éléments (1 à 6), en ce que parmi trois points d'intersection (P1, P3, P5), entre lesquels se trouve respectivement encore un autre point (P2, P4, P6), au moins l'un d'entre eux est situé d'un côté et au moins l'un d'entre eux est situé de l'autre côté d'un plan qui est matérialisé par les trois autres points d'intersection (P2, P4, P6), et en ce que le premier et le quatrième, le deuxième et le cinquième ainsi que le troisième et sixième côtés de la chaîne à articulations (S12 et S45, S23 et S56, S34 et S61) sont respectivement de longueur égale, et en ce que le premier et le quatrième, le deuxième et le cinquième ainsi que le troisième et sixième angles de la chaîne à articulations (W1 et W4, W2 et W5, W3 et W6) sont respectivement de valeur égale.

**3.** Dispositif selon la revendication 1, caractérisé en ce qu'il comporte sept éléments (1 à 7).

**4.** Dispositif selon une ou plusieurs des revendications 1 ou 2, caractérisé en ce que les axes d'articulation (A12 à A71) sont des axes à vis.

**5.** Dispositif selon une ou plusieurs des revendications 1 à 4, caractérisé en ce que tous les angles (W1, W2, W3,...) sont de valeur égale, en particulier de 90°, et en ce que tous les côtés (S12 à S71) sont de longueur égale.

**6.** Dispositif selon une ou plusieurs des revendications 1 à 5, caractérisé en ce qu'au moins un des éléments (1 à 7) est relié à un récipient mobile (8).

**7.** Dispositif selon une ou plusieurs des revendications 1 à 5, caractérisé en ce qu'un ou plusieurs des éléments est, ou sont, reliés à des éléments de forme plane (19).

**8.** Dispositif selon la revendication 7, caractérisé en ce qu'une membrane (14) ou des éléments de forme plane (14,19) sont disposés entre les éléments (1 à 7).

**9.** Dispositif selon la revendiction 7 ou 8, caractérisé en ce que le dispositif comporte des surfaces fixes de guidage des milieux.

**10.** Dispositif selon une ou plusieurs des revendications 7 à 9, caractérisé en ce qu'il est installé dans un élément (15) de forme tubulaire.

**11.** Dispositif selon la revendication 6, caractérisé en ce que l'un des axes (A12 à A71) encercle le récipient (8) comme le ferait une ceinture à galets.

**12.** Dispositif selon l'une quelconque des revendications 1 à 11, caractérisé en ce qu'il comporte plusieurs chaînes à articulations, deux éléments (1 à 7) voisins de chaque chaîne à articulations étant rigidement reliés à deux éléments (1 à 7) voisins de l'autre chaîne à articulations.

**13.** Dispositif selon l'une quelconque des revendications 1 à 12, caractérisé en ce que des parties du dispositif sont équipées de systèmes favorisant l'agitation des milieux.

**14.** Dispositif selon la revendication 7 ou 8, caractérisé en ce que des liquides ou des gaz ajoutés au milieu et mélangés avec celui-ci passent par des ouvertures prévues dans les surfaces.

**15.** Dispositif selon l'une quelconque des revendications 1 à 14, caractérisé en ce qu'il est prévu au moins au sommet d'un angle une articulation dont l'axe est perpendiculaire aux axes de rotation des deux articulations voisines.

# Fig. 1

# Fig. 2

Fig. 3

Fig. 4

Fig. 5

# Fig. 6

# Fig. 7

# Fig. 8

Fig. 9